# EUROPÄISCHE PATENTANMELDUNG

(11) **EP 1 249 655 A1**
(43) Veröffentlichungstag der Anmeldung: **16.10.2002**
(21) Anmeldenummer: 02090111.2
(22) Anmeldetag: 15.03.2002
(51) Int. Cl.: F16L 13/14

(54) **Rohrverbindung**

(30) Priorität: 10.04.2001 DE 10118957
(71) Anmelder: Mapress GmbH & Co. KG, 40764 Langenfeld (DE)
(72) Erfinder: Klemp, Harald, Dr.-Ing., 47918 Tönisvorst (DE); Simon, Udo, 45479 Mülheim (DE)
(74) Vertreter: Meissner, Peter E., Dipl.-Ing.

(57) **Zusammenfassung**

Die Erfindung betrifft eine Rohrverbindung, bestehend aus einem metallischen Pressfitting (1), der mindestens einen im Querschnitt wulstartig ausgebildeten, ein Dichtelement (3) aufnehmenden Abschnitt (2) und einen daran anschließenden, der Einschubseite zugewandten und/oder der Einschubseite abgewandten, zylindrisch ausgebildeten Abschnitt (7a,7b) aufweist und einem metallischen Leitungsrohr (4), dessen glatt ausgebildeter Endbereich nach dem Einschub in den Pressfitting am Absatz (8) des ersten zylindrisch ausgebildeten Abschnittes des Pressfittings zur Anlage kommt. Dabei weist das Dichtelement mindestens einen in Umlaufrichtung liegenden Abschnitt auf, der mit einem vom Ausgangsquerschnitt abweichenden Querschnitt versehen ist, der eine noppenartige Ausbauchung (19) aufweist, die sich im Querschnitt gesehen maximal bis 180 Grad erstreckt.

## Beschreibung

Die Erfindung betrifft eine Rohrverbindung bestehend aus einem metallischen Pressfitting und Leitungsrohr sowie einem Dichtelement gemäß dem Oberbegriff des Patentanspruches 1.

Eine gattungsbildende Rohrverbindung ist aus der DE 197 22 935 C1 bekannt. Diese besteht aus einem metallischen Pressfitting, der mindestens einen im Querschnitt wulstartig ausgebildeten, ein Dichtelement aufnehmenden Abschnitt und einen daran anschließenden, der Einschubseite zugewandten und/oder der Einschubseite abgewandten zylindrisch ausgebildeten Abschnitt aufweist, wobei der der Einschubseite abgewandte zylindrisch ausgebildete Abschnitt einen nach innen sich erstreckenden Absatz aufweisend in eine daran anschließenden zylindrisch ausgebildeten Abschnitt übergeht, dessen Innendurchmesser kleiner ist als die anderen zylindrisch ausgebildeten Abschnitte. Die bekannte Rohrverbindung weist weiterhin ein metallisches Leitungsrohr auf, dessen glattendiger Endbereich nach dem Einschub in den Pressfitting am Absatz des ersten zylindrisch ausgebildeten Abschnittes des Pressfittings zur Anlage kommt. Mittels eines den Pressfitting umfassenden mindestens zwei Pressbacken aufweisenden Presswerkzeuges wird nach dem Schließen des Presswerkzeuges eine unlösbare dichte Rohrverbindung gebildet. Während des Verpressens wirken die Pressbacken sowohl auf die Ringwulst einschließlich des darin eingelegten Dichtelementes als auch auf den der Einschubseite zugewandten und/oder abgewandten zylindrisch ausgebildeten Abschnitt des Pressfittings ein. Zur Erzeugung einer Leckagestelle im montierten, aber nicht verpressten Zustand weist das bekannte Dichtelement mindestens einen in Umlaufrichtung liegenden Abschnitt auf, der mit einem vom Ausgangsquerschnitt abweichenden Querschnitt versehen ist. Der im Querschnitt abweichende Abschnitt ist mit einer über den Umfang und in der Querschnittsebene sich erstreckenden Ausbauchung und einer dem eingeschobenen Leitungsrohr zugewandten radial in den Querschnitt des Dichtelementes sich erstreckenden Ausnehmung versehen. Das Volumen der Ausbauchung ist im Vergleich zum Ausgangsquerschnitt mindestens so groß wie das zum Ausgangsquerschnitt fehlende Volumen der Ausnehmung. Vorzugsweise weist das Dichtelement drei symmetrisch über den Umfang verteilt angeordnete Abschnitte mit einem abweichenden Querschnitt auf.

Nachteilig bei dieser bekannten Rohrverbindung ist, dass der so ausgebildete Konturdichtring schwierig herzustellen ist und bedingt durch die Ausbauchung das Einlegen des Dichtelementes in die Ringwulst Probleme bereitet.

Aus einem Firmenprospekt der Firma Benkan aus dem Jahre 1995 ist es bekannt, ein Dichtelement mit einer über den gesamten Umfang sich erstreckenden noppenartigen Ausbuchtung zu verwenden, die mit einer steilen Flanke in die angrenzenden Bereiche übergeht. Üblicherweise liegen zwei noppenartige Ausbuchtungen mit einem geringem Abstand nebeneinander. Nachteilig bei dieser Lösung ist, dass die noppenartigen Ausbuchtungen sich nicht ohne Probleme verpressen lassen, so dass Undichtheiten entstehen können. Auch das Einlegen des Dichtelementes in die Ringwulst bereitet Schwierigkeiten und die Lage der noppenartigen Ausbuchtungen in Bezug auf die Teilungsebene der Pressbacken beeinflusst die Qualität der Verpressung des Dichtelementes.

In der DE 298 13 935 U1 ist eine unlösbare Pressverbindung zwischen einem metallischen Fitting und einem Metallrohrende offenbart mit einem Dichtelement, das in der Innenund/oder in der Außenkontur mindestens eine Stelle bzw. einen Bereich aufweist, der von der kreisförmigen Kontur abweicht.

Als eine Variante wird vorgeschlagen, auf der Innenseite mindestens einen sich radial nach innen erstreckenden Wulst anzuordnen, der erst nach der Verpressung flach gedrückt wird.

Aufgabe der Erfindung ist es, eine Rohrverbindung der gattungsmäßigen Art anzugeben, deren Dichtelement unter Beibehaltung des Konzeptes der Bildung einer erzwungenen Leckagestelle im montierten aber nicht verpressten Zustand eine Führung für das Leitungsrohr beim Einschieben in den Pressfitting gewährleistet.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist im montierten, aber nicht verpressten Zustand auch unter Berücksichtigung der Fertigungstoleranzen für Dichtelement, Pressfitting und Leitungsrohr das Dichtelement so bemessen und nimmt in Bezug auf Ringwulst und Leitungsrohr radial eine Lage ein, so dass ein einen Durchtritt des zu fördernden Mediums erlaubender Spalt sich bildet. Dieser Spalt wird beim Verpressen abdichtend verschlossen. Der im Querschnitt abweichende Abschnitt weist eine radial sich erstreckende noppenartige Ausbauchung auf, die in Umlaufrichtung gesehen ohne Sprungstelle in die angrenzenden Abschnitte übergeht und im Querschnitt gesehen sich maximal bis 180 Grad erstreckt. Die Radialerstreckung der noppenartigen Ausbauchung liegt senkrecht zur Achse des Leitungsrohres.

Bei einer ersten Ausführungsform kommt das Dichtelement an der Innenwandung der Ringwulst zumindest berührend zur Anlage und zwischen Dichtelement und Außenfläche der Leitungsrohre wird der Spalt gebildet. Die noppenartige Ausbauchung erstreckt sich in diesem Fall radial nach innen. Bei einer zweiten Ausführungsform kommt das Dichtelement an der Außenfläche des Leitungsrohres zumindest berührend zur Anlage und zwischen Dichtelement und Innenwandung der Ringwulst wird der Spalt gebildet. Die noppenartige Ausbauchung erstreckt sich in diesem Fall radial nach außen.

Die vorgeschlagene Anordnung hat den Vorteil, dass das Dichtelement einfach herstellbar ist und die Positionierung in Bezug auf die Teilungsebene der Pressbacken keine Probleme bereitet, da die noppenartige Ausbauchung sich im Querschnitt nur bis maximal 180 Grad erstreckt. Die noppenartigen Ausbauchungen gewährleisten eine Führung für das Leitungsrohr beim Einschieben in den Pressfitting ohne die gewünschte Leckage funktionsmäßig einzuschränken.

Nach einem weiteren Merkmal der Erfindung verläuft die noppenartige Ausbauchung in Umlaufrichtung gesehen auf einem gedachten Kreis, dessen Innendurchmesser kleiner ist als der Innendurchmesser des Dichtelementes ohne abweichende Abschnitte.

Die Erstreckung der noppenartigen Ausbauchung beträgt in Umlaufrichtung gesehen mindestens 5 Grad, vorzugsweise 7 Grad. Der im Querschnitt abweichende Abschnitt, d. h. Ausbauchung plus Übergänge weist eine in Umlaufrichtung liegende Erstreckung von 15 Grad, vorzugsweise von 20 Grad auf. Die radiale Tiefe der noppenartigen Ausbauchung beträgt mindestens 0,1 mm, vorzugsweise 0,2 mm. In bekannter Weise weist das Dichtelement drei symmetrisch über den Umfang verteilt angeordnete Abschnitte mit einem abweichenden Querschnitt auf.

Weitere Merkmale, Vorteile und Einzelheiten der Erfindung ergeben sich aus der nachfolgenden Beschreibung von in einer Zeichnung dargestellten Ausführungsbeispielen.
Es zeigen:
- Fig. 1: In einem hälftigen Längsschnitt eine Rohrverbindung im montierten Zustand vor der Verpressung mit Spaltbildung am Rohr,
- Fig. 2: in vergrößerter Darstellung den Ringwulstbereich,
- Fig. 3a: eine Draufsicht auf ein erfindungsgemäß ausgebildetes Dichtelement,
- Fig. 3b: eine vergrößerte Darstellung der Einzelheit X,
- Fig. 3c: einen Schnitt entlang der Linie A-A in Figur 3a und

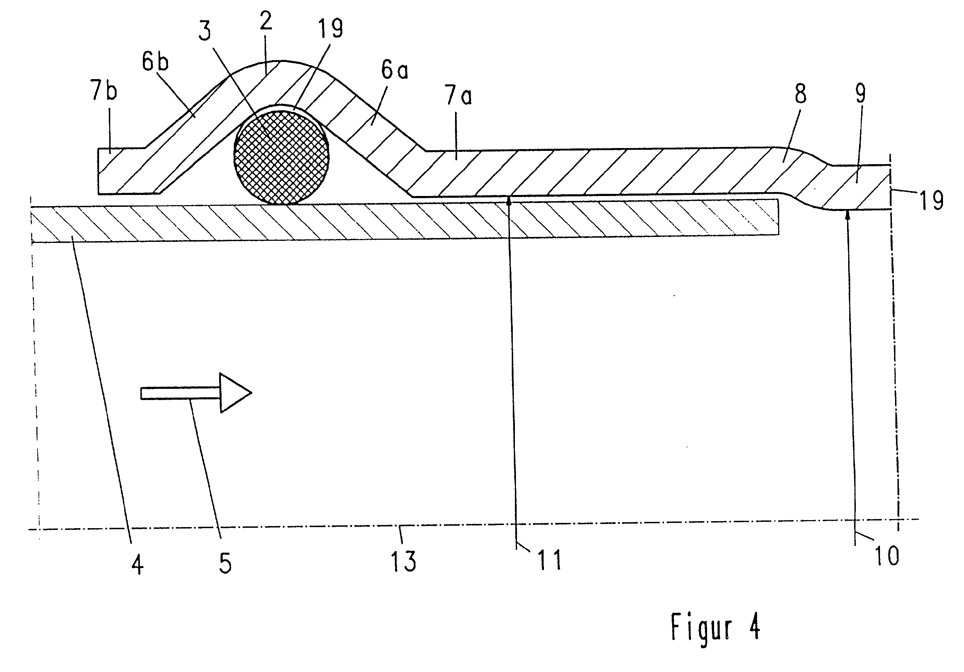

- Fig. 4: wie Figur 1, aber eine andere Ausführungsform des Pressfittings mit Spaltbildung an der Innenwandung der Ringwulst.

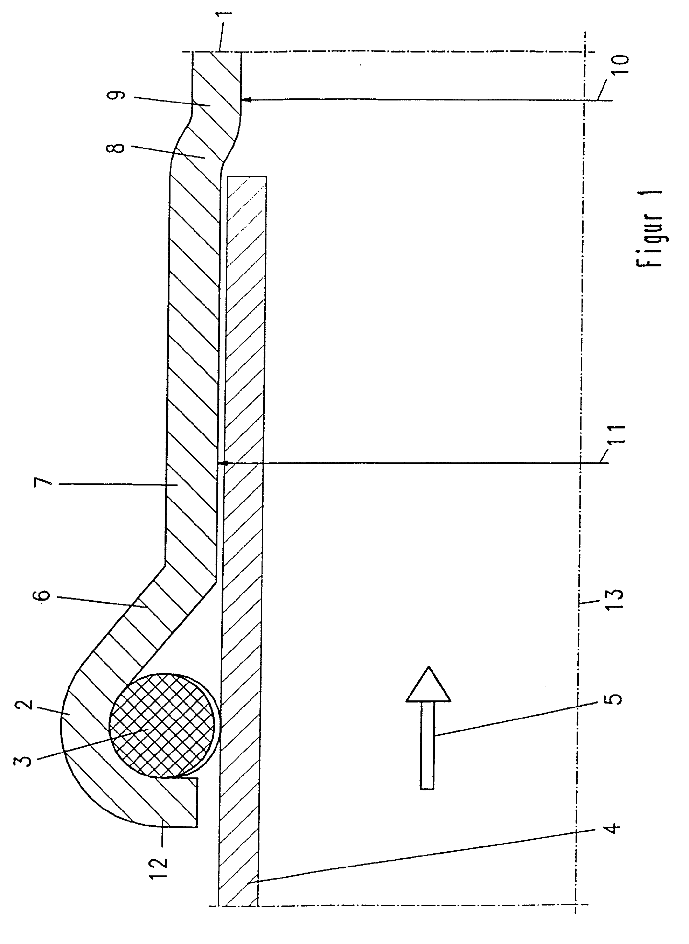

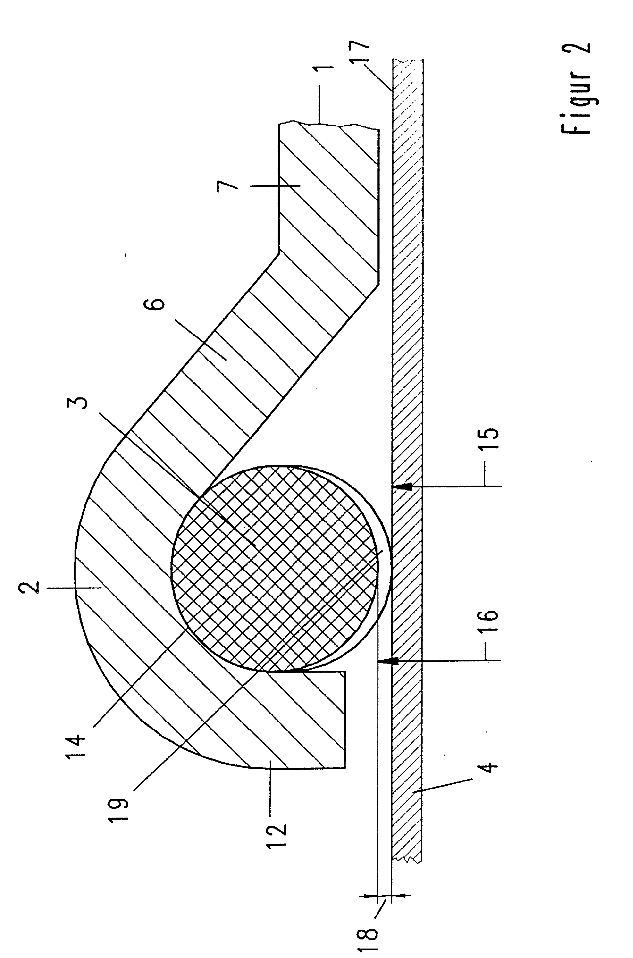

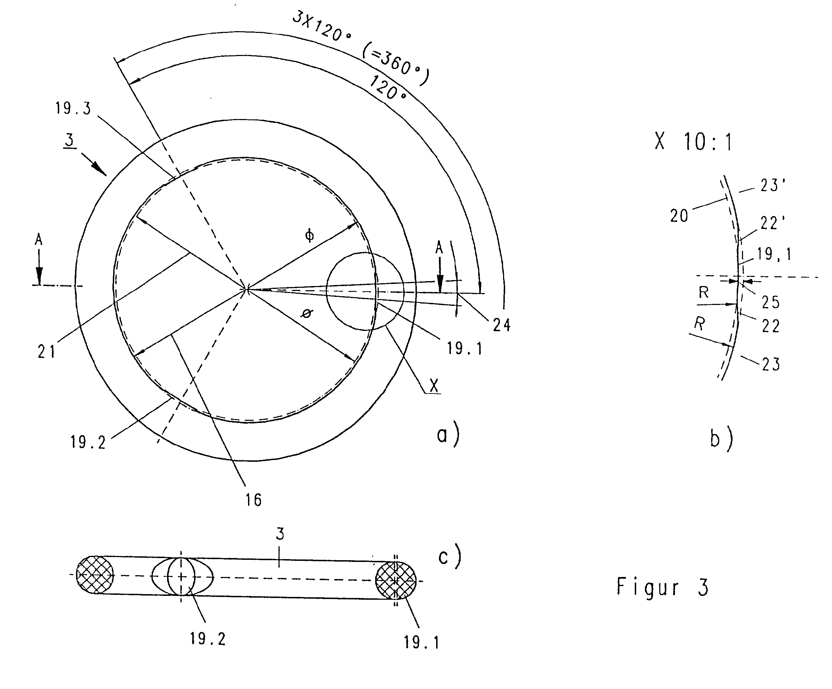

Figur 1 zeigt in einem hälftigen Längsschnitt eine erfindungsgemäß ausgebildete Rohrverbindung im montierten Zustand vor der Verpressung. Die hier dargestellte Rohrverbindung besteht aus einem Pressfitting 1, dessen stirnseitiges Ende eine Ringwulst 2 mit einem darin einlegbaren konturierten Dichtelement 3 aufweist. Üblicherweise ist das Dichtelement 3 als Rundschnurring ausgebildet, wobei erfindungsgemäß das Dichtelement 3 mindestens einen im Querschnitt abweichenden Abschnitt aufweist. Die Einzelheiten dazu sind Bestandteil der Beschreibung für Figur 2 und Figur 3. In den Pressfitting 1 eingeschoben ist ein glattendiges Leitungsrohr 4, dessen Einschubrichtung 5 durch einen Pfeil gekennzeichnet ist. In Einschubrichtung 5 gesehen schließt sich an die Ringwulst 2 mit einem schrägen Übergang 6 ein zylindrisch ausgebildeter Abschnitt 7 an. Dieser geht mit einem Absatz 8 über in einen zweiten zylindrischen Abschnitt 9, dessen Innendurchmesser 10 geringer ist als der Innendruchmesser 11 des ersten zylindrischen Abschnittes 9. Am Absatz 8 kommt auf der Innenseite das eingeschobene Leitungsrohr 4 zur Anlage. Entgegengesetzt zur Einschubrichtung 5 geht in diesem Ausführungsbeispiel die Ringwulst 2 über in einen stirnseitigen Bereich 12, dessen Schenkel nahezu senkrecht liegt zur Achse 13 des Leitungsrohres 4.

Figur 2 zeigt in einer vergrößerten Darstellung den Bereich der Ringwulst 2, so dass man leichter als in Figur 1 die erfindungsgemäße Ausbildung erkennen kann. In diesem Ausführungsbeispiel kommt im montierten Zustand, aber vor der Verpressung das eingelegte Dichtelement 3 an der Innenwandung 14 der Ringwulst 2 zur Anlage, im Extremfall nur berührend, im Regelfall unter leichter Vorspannung. Das eingeschobene Leitungsrohr 4 weist in Bezug auf den Pressfitting 1 und das Dichtelement 3 einen Außendurchmesser 15 auf, der auch unter Berücksichtigung der Fertigungstoleranzen für den Pressfitting 1, das Dichtelement 3 und das Leitungsrohr 4 immer geringer ist als der Innendurchmesser 16 des eingelegten Dichtelementes 3. Dadurch wird sichergestellt, dass zwischen Außenfläche 17 des Leitungsrohres 4 und dem Dichtelement 3 ein Spalt 18 sich bildet. Dieser Spalt 18 ist die bewusst erzeugte Leckagestelle für das abzudichtende Medium, so dass bei Nichtverpressung dieser Rohrverbindungsstelle die Druckprobe negativ ausfallen würde. Das hier dargestellte Dichtelement 3 zeichnet sich gegenüber einem üblichen Rundschnurring dadurch aus, dass es wenigstens einen Abschnitt mit einem abweichenden Querschnitt aufweist. Die Abweichung ist charakterisiert durch eine noppenartige Ausbauchung 19, die radial sich nach innen erstreckt. Die Einzelheiten dazu sind in Figur 3a bis 3c dargestellt. Der Vorteil dieser Ausbildung ist darin zu sehen, dass über diese noppenartige Ausbauchung 19 das Leitungsrohr 4 eine Führung beim Einschieben in den Pressfitting 1 erhält, ohne dass die bewusst erzeugte Leckagestelle funktionsmäßig eingeschränkt wird.

Gemäß Figur 3a sind vorzugsweise drei noppenartige Ausbauchungen 19.1 bis 19.3 vorgesehen, die um 120 Grad versetzt zueinander angeordnet sind. Die eigentliche Ausbauchung 19.1 liegt auf einem gedachten Kreis 10 - hier strichpunktiert dargestellt-dessen Innendurchmesser 21 geringer ist als der Innendurchmesser 16 des übrigen Dichtelementes 3. Mit je einem Übergang 22, 22' geht die noppenartige Ausbauchung 19.1 flach verlaufend und ohne Sprungstelle über in die angrenzenden Bereiche 23, 23' des Dichtelementes 3. Wesentlich ist, dass die Übergänge 22, 22' sanft abgerundet sind, damit sie später beim Verpressen keine Falten bilden können. In Umlaufrichtung gesehen beträgt die Erstreckung 24 für die noppenartige Ausbauchung 19.1 in diesem Ausführungsbeispiel 7 Grad. Die Erstreckung für den gesamten Abschnitt mit abweichendem Querschnitt, d. h. noppenartige Ausbauchung 19.1 plus Übergänge 22, 22' beträgt etwa 20 Grad. Die radiale Tiefe 15 für die noppenartige Ausbauchung 19.1 liegt bei 0,2 mm.

Ein weiterer wichtiger Aspekt betrifft die Umfangserstreckung in der Querschnittsebene wie in Figur 2 und Figur 3a zu sehen ist. Sie ist beschränkt auf maximal 180 Grad, so dass im Querschnitt gesehen das Dichtelement 3 keine hervorstehenden Bereiche aufweist. Das ist von Bedeutung beim Einlegen des Dichtelementes 3 in die Ringwulst 2.

### Bezugszeichenliste

- 1: Pressfitting
- 2: Ringwulst
- 3: Dichtelement
- 4: Leitungsrohr
- 5: Einschubrichtung
- 6: schräger Übergang
- 7: erster zylindrisch ausgebildeter Abschnitt
- 8: Absatz
- 9: zweiter zylindrisch ausgebildeter Abschnitt
- 10: Innendurchmesser zweiter Abschnitt
- 11: Innendurchmesser erster Abschnitt
- 12: stirnseitiger Bereich der Ringwulst
- 13: Achse Leitungsrohr
- 14: Innenwandung Ringwulst
- 15: Außendurchmesser Leitungsrohr
- 16: Innendurchmesser Dichtelement
- 17: Außenfläche Leitungsrohr
- 18: Spalt
- 19: noppenartige Ausbauchung
- 20: gedachter Kreis
- 21: Innendurchmesser gedachter Kreis
- 22, 22': Übergang
- 23, 23': angrenzender Bereich
- 24: Erstreckung noppenartige Ausbauchung
- 25: radiale Tiefe

## Patentansprüche

1. Rohrverbindung, bestehend aus einem metallischen Pressfitting, der mindestens einen im Querschnitt wulstartig ausgebildeten, ein Dichtelement aufnehmenden Abschnitt und einen daran anschließenden, der Einschubseite zugewandten und/oder der Einschubseite abgewandten, zylindrisch ausgebildeten Abschnitt aufweist, wobei der der Einschubseite abgewandte zylindrisch ausgebildete Abschnitt einen nach innen sich erstreckenden Absatz aufweisend in einen daran anschließenden zylindrisch ausgebildeten Abschnitt übergeht, dessen Innendurchmesser kleiner ist als die anderen zylindrisch ausgebildeten Abschnitte und einem metallischen Leitungsrohr, dessen glatt ausgebildeter Endbereich nach dem Einschub in den Pressfitting am Absatz des ersten zylindrisch ausgebildeten Abschnittes des Pressfittings zur Anlage kommt und mittels eines den Pressfitting umfassenden mindestens zwei Pressbacken aufweisenden Presswerkzeuges nach dem Schließen des Presswerkzeuges eine unlösbare dichte Rohrverbindung gebildet wird, wobei während des Verpressens die Pressbacken sowohl auf die Ringwulst einschließlich des daran eingelegten Dichtelementes als auch auf den der Einschubseite zugewandten und/oder abgewandten zylindrisch ausgebildeten Abschnitt des Pressfittings einwirken und das Dichtelement mindestens einen in Umlaufrichtung liegenden Abschnitt aufweist, der mit einem vom Ausgangsquerschnitt abweichenden Querschnitt versehen ist, der eine sich radial nach innen erstreckende Ausbauchung aufweist, die in Umlaufrichtung gesehen ohne Sprungstelle in den angrenzenden Bereich übergeht,
**dadurch gekennzeichnet,**
**dass** die noppenartige Ausnehmung (19) im Querschnitt gesehen sich maximal bis 180 Grad erstreckt und die radiale Erstreckung senkrecht zur Achse (13) des Leitungsrohres (4) liegt und in Umlaufrichtung gesehen entlang eines gedachten Kreises (24) verläuft, dessen Innendurchmesser (2) kleiner ist als der Innendurchmesser (16) des Dichtelementes (3) ohne abweichende Abschnitte.

2. Rohrverbindung nach Anspruch 1,
**dadurch gekennzeichnet,**
**dass** das Dichtelement (3) an der Innenwandung (14) der Ringwulst (2) zumindest berührend zur Anlage kommt und zwischen Dichtelement (3) und Außenfläche (17) Leitungsrohr (4) der Spalt (18) gebildet wird und die noppenartige Ausbauchung (19) radial nach innen sich erstreckt.

3. Rohrverbindung nach Anspruch 1,
**dadurch gekennzeichnet,**
**dass** das Dichtelement (3) an der Außenfläche (17) des Leitungsrohres (4) zumindest berührend zur Anlage kommt und zwischen Dichtelement (3) und Innenwandung (14) Ringwulst (2) der Spalt (1) gebildet wird und die noppenartige Ausbauchung (19) radial nach außen sich erstreckt.

4. Rohrverbindung nach einem der Ansprüche 1 bis 3,
**dadurch gekennzeichnet,**
**dass** die Erstreckung (24) der noppenartigen Ausbauchung (19) in Umlaufrichtung gesehen mindestens 5 Grad beträgt.

5. Rohrverbindung nach Anspruch 4,
**dadurch gekennzeichnet,**
**dass** die Erstreckung (24) der noppenartigen Ausbauchung (19) in Umlaufrichtung gesehen 7 Grad beträgt.

6. Rohrverbindung nach einem der Ansprüche 1 bis 5,
**dadurch gekennzeichnet,**
**dass** der im Querschnitt abweichende Abschnitt in Umlaufrichtung gesehen eine Erstreckung von mindestens 15 Grad beträgt.

7. Rohrverbindung nach Anspruch 6,
**dadurch gekennzeichnet,**
**dass** die Erstreckung in Umlaufrichtung des Abschnittes 20 Grad beträgt.

8. Rohrverbindung nach einem der Ansprüche 1 bis 7,
**dadurch gekennzeichnet,**
**dass** die radiale Tiefe (25) der noppenartigen Ausbauchung (19) mindestens 0,1 mm beträgt.

9. Rohrverbindung nach Anspruch 8,
**dadurch gekennzeichnet,**
**dass** die radiale Tiefe (25) 0,2 mm beträgt.

10. Rohrverbindung nach einem der Ansprüche 1 bis 9,
**dadurch gekennzeichnet,**
**dass** das Dichtelement (3) drei symmetrisch über den Umfang verteilt angeordnete Abschnitte mit einem abweichenden Querschnitt aufweist.
